# EUROPÄISCHE PATENTSCHRIFT

(11) **EP 3 591 567 B1**
(45) Veröffentlichungstag und Bekanntmachung des Hinweises auf die Patenterteilung: **02.09.2020**
(21) Anmeldenummer: 18181130.8
(22) Anmeldetag: 02.07.2018
(51) Int. Cl.: G06K 7/10

(54) **OPTOELEKTRONISCHER SENSOR UND VERFAHREN ZUR WIEDERHOLTEN OPTISCHEN ERFASSUNG VON OBJEKTEN IN UNTERSCHIEDLICHEM OBJEKTABSTAND**
OPTOELECTRONIC SENSOR AND METHOD FOR REPEATED OPTICAL DETECTION OF OBJECTS AT DIFFERENT OBJECT DISTANCES
CAPTEUR OPTOÉLECTRONIQUE ET PROCÉDÉ DE DÉTECTION OPTIQUE RÉPÉTITIVE D'OBJETS À DISTANCE DE L'OBJET DIFFÉRENTE

(43) Veröffentlichungstag der Anmeldung: 08.01.2020
(73) Patentinhaber: SICK AG, 79183 Waldkirch (DE)
(72) Erfinder: Schneider, Dr. Florian, 79276 Reute (DE); Müller, Dr. Romain, 79252 Stegen (DE)

(56) Entgegenhaltungen:
- EP-A1- 2 003 599
- EP-A1- 2 693 362
- WO-A1-2018/028795

## Beschreibung

Die Erfindung betrifft einen optoelektronischen Sensor und ein Verfahren zur wiederholten optischen Erfassung von Objekten in unterschiedlichem Objektabstand nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen. Dabei sind neben den kamerabasierten Codelesern auch weiterhin die schon länger bekannten Barcodescanner verbreitet im Einsatz.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Speziell bei Codelesern werden die Objekte für eine korrekte Sortierung oder ähnliche Bearbeitungsschritte anhand der angebrachten Codes identifiziert.

Die Kamera wird zur Inbetriebnahme an geeigneter Position montiert und ausgerichtet, wofür sie häufig auch Hilfestellungen wie projizierte Zielmuster und dergleichen anbietet. Es wird dann regelmäßig davon ausgegangen, dass die Kamera optimal installiert ist und sich über eine gewisse Laufzeit der Zustand der Kamera zur Umgebung nicht ändert. Diese Annahme ist aber nicht immer berechtigt. Herkömmliche Kameras und Barcodescanner besitzen auch praktisch keine Eigenintelligenz, um das dadurch vorhandene Optimierungspotential auszuschöpfen.

Es gibt herkömmliche Kameras, die einen eigenen Abstandssensor aufweisen, der mit einem Lichtlaufzeitverfahren Abstände zu einem Objekt ermittelt, um die Fokusverstellung nachzuregeln. Diese Abstandsmessung wird auch dazu genutzt, eine Aufnahme auszulösen, falls sich ein Objekt in einer bestimmten Distanz befindet. Das ist aber jeweils nur eine unmittelbare Reaktion auf den aktuell gemessenen Abstand.

Die EP 0 789 315 B1 offenbart einen Codeleser mit einer Regelung für deren Dekodierverhalten, um einen optimalen Kompromiss zwischen Leistungsfähigkeit und Zuverlässigkeit zu finden und aufrecht zu erhalten. Das bezieht sich auf Parameter des Decoders und nicht die eigentliche optische Erfassung, deren Änderungen als äußerer Einfluss hingenommen werden und welche die Regelung auszugleichen sucht. Es werden auch keine Objektabstände gemessen oder sonstige zusätzliche optische Informationen gewonnen, um die Regelung zu verbessern.

In der EP 1 014 292 B1 wird ein Verfahren zum Betreiben eines optischen Codelesesystems vorgestellt, bei dem Parameter des Lesevorgangs und damit ein geeigneter Arbeitspunkt automatisch nachgeregelt werden. Dazu werden aber nur die aufgenommenen Bilder selbst analysiert, Zusatzinformationen wie eine Abstandsbestimmung gehen in diese Analyse nicht ein.

EP 2 003 599 A1 und EP 2 693 362 A1 offenbaren optoelektronische Sensoren und Verfahren zur Erfassung von Objekten in unterschiedlichem Objektabstand, wobei jeweils die in den Oberbegriffen der unabhängigen Ansprüche genannten Merkmale aufgrund dieser Dokumente bekannt sind.

Es ist daher Aufgabe der Erfindung, die optische Erfassung von Objektinformationen, speziell das Lesen von Codes, besser an die Anwendungssituation anzupassen.

Diese Aufgabe wird durch einen optoelektronischen Sensor und ein Verfahren zur wiederholten optischen Erfassung von Objekten in unterschiedlichem Objektabstand nach Anspruch 1 beziehungsweise 15 gelöst. Ein Lichtempfänger erfasst Empfangslicht von den Objekten und erzeugt daraus ein Empfangssignal. Im Falle eines Bildsensors als Lichtempfänger sind das vorzugsweise Bilddaten. Eine Auswertungseinheit gewinnt mindestens eine Objektinformation aus dem Empfangssignal. Zusätzlich wird der jeweilige Objektabstand gemessen. Dazu wird vorzugsweise ein eigener Abstandssensor eingesetzt, der insbesondere auf einem Lichtlaufzeitverfahren (TOF, Time of Flight) basiert und parallel oder im Hintergrund zur eigentlichen Messung der Objektinformation arbeitet. Es ist denkbar, dass der Lichtempfänger beziehungsweise dessen Empfangssignal an dieser Abstandsmessung beteiligt ist oder sie durchführt. Auch dann ist aber die Messung des Objektabstands eine zusätzliche Auswertung und/oder Messung und der Objektabstand eine weitere Information zusätzlich zu der Objektinformation.

Die Erfindung geht von dem Grundgedanken aus, den Zustand des Sensors mittels der Abstandsmessung zu überwachen und statistische Aussagen zu treffen, ob es Optimierungspotential oder Wartungsbedarf gibt. Diese Überwachung erfolgt parallel zum eigentlichen Betrieb, in dem die Objektinformationen erzeugt werden. Es wird eine Messgröße aus dem Empfangssignal gewonnen und dem Objektabstand zugeordnet, wobei beispielsweise durch zeitliche Nähe sichergestellt ist, dass Messgröße und Objektabstand zum selben Objekt gehören. Die Messgröße ist in aller Regel nicht die Objektinformation, sondern eine Hilfsgröße, beispielsweise die ein die Erfassung der eigentlichen Objektinformation charakterisierender Wert wie Kontrast, Belichtung oder eine Erfolgsbewertung. Nach Erfassung einer Vielzahl von Objekten und jeweiliger Zuordnung der Messgröße zu dessen Objektabstand wird eine erste Verteilung der Messgröße über den Objektabstand gebildet, welche die angestrebten statistischen Aussagen ermöglicht. Die Verteilung bezieht sich immer auf einen gewissen Zeitraum und damit eine Vielzahl erfasster Objekte. Die Wahl dieser Vielzahl sollte so sein, dass ausreichend Statistik zur Verfügung steht, zugleich aber der jeweilige Zeitraum kurz genug ist, um auf äußere Veränderungen nach angemessener Umstellungszeit zu reagieren, die je nach Anwendung im Bereich von Sekunden, Minuten oder Stunden liegen kann.

Die Erfindung hat den Vorteil, dass mittels der Abstandsmessung und aus der ersten Verteilung gewonnene statistischer Aussagen der Zustand von Sensor und Umgebung erfasst wird. Der Sensor besitzt damit eine Eigenintelligenz und kann von sich aus Störungen erkennen, Optimierungsvorschläge machen oder gleich selbst durch Anpassung geeigneter Parameter umsetzen beziehungsweise einen Wartungsbedarf signalisieren.

Der Sensor ist bevorzugt stationär an einem Objektstrom angeordnet, etwa auf einem Förderband. Bei einer Montage in Vogelperspektive entspricht der jeweils gemessene Objektabstand einer Objekthöhe durch Differenzbildung mit der bekannten Montagehöhe. Deshalb wird an manchen Stellen die Objekthöhe synonym zum Objektabstand verwendet, ohne damit eine Einschränkung auf diese bestimmte Anordnung zu implizieren.

Die Auswertungseinheit ist bevorzugt dafür ausgebildet, eine zweite Verteilung der Objektabstände zu bilden. Es wird also zusätzlich zu der ersten Verteilung, in der mittels der Objektabstände eine Verteilung der Messgröße über die Objektabstände erzeugt wird, auch eine zweite Verteilung als Häufigkeitsverteilung der Objektabstände selbst gebildet. Dadurch steht mehr statistische Information zur Verfügung, um den Zustand des Sensors zu überwachen und zu optimieren.

Die Auswertungseinheit ist bevorzugt dafür ausgebildet, als erste Verteilung eine Verteilung der Objektabstände und als zweite Verteilung eine Verteilung der Objektabstände in einem anderen Zeitabschnitt zu bilden. In dieser Ausführungsform ist der Objektabstand ausnahmsweise selbst die Messgröße. Der Objektabstand wird aber weiterhin zusätzlich zu der eigentlich gesuchten Objektinformation bestimmt. Indem Häufigkeitsverteilungen des Objektabstands aus verschiedenen Zeiträumen bestimmt werden, können insbesondere Veränderungen der Justierung und der Montage durch gewollte oder ungewollte Manipulation erkannt werden, wie einen Stoß gegen den Sensor.

Die Auswertungseinheit ist bevorzugt dafür ausgebildet, die erste Verteilung und die zweite Verteilung zu vergleichen und danach Änderungen des Sensors vorzunehmen oder vorzuschlagen, um die Übereinstimmung der Verteilungen zu verbessern. Der Sensor sollte insbesondere so ausgerichtet beziehungsweise eingestellt sein, dass dies für die am häufigsten tatsächlich auftretenden Objektabstände zu guten Ergebnissen hinsichtlich der zu ermittelnden Objekteigenschaft ist. Dazu werden die beiden Verteilungen vorzugsweise durch Veränderung von Eigenschaften des Sensors, die sich auf die Messgröße auswirken, in möglichst große Übereinstimmung gebracht. Ein denkbarer Teilschritt ist, die beiden Verteilungen miteinander zu multiplizieren. Dieses Produkt der Verteilungen sollte möglichst gut der zweiten Verteilung der tatsächlich aufgetretenen und damit voraussichtlich auch in Zukunft auftretenden Objektabstände entsprechen. Eine derartige Anpassung aufgrund des Vergleichs von Verteilungen ist gegenüber einer Echtzeit-Nachregelung anhand des gemessenen Objektabstands noch während der Erfassung des Empfangssignals träge und damit vor allem für den Fall geeignet, dass eine hochdynamische Anpassung innerhalb der Erfassung eines Objekts nicht möglich ist.

Die Änderung ist bevorzugt eine optische Nachjustierung. Damit wird erkannt, wann und vorzugsweise wie die optischen Einstellungen verbessert werden können. Das betrifft zum einen Einstellungen einer Empfangsoptik des Sensors, insbesondere von deren Fokuslage. Es ist aber auch denkbar, dass der gesamte Sensor nachjustiert werden muss, beispielsweise weil er sich durch Vibrationen oder einen Stoß aus seiner ursprünglichen Justierung bewegt hat. Die Anpassung der Fokuslage erlaubt auch ein anschauliches Beispiel zur Erläuterung, für welche Sensoren ein Vergleich von Verteilungen sinnvoll ist, nämlich insbesondere bei einem Fixfokusgerät, wo der Bedarf für eine Veränderung der festen Fokuslage erkannt wird. Das Erheben von vielen Datenpunkten, um statistisch zu dieser Erkenntnis zu gelangen, wäre weniger sinnvoll, wenn der Sensor bereits über einen schnellen Autofokus anhand des aktuellen Objektabstands verfügt.

Die Änderung ist bevorzugt eine Anpassung der Beleuchtungsintensität. Somit wird, soweit möglich, verhindert, dass Objekte unter- oder überbelichtet erfasst sind. Gemeint ist hier eine effektive Beleuchtungsintensität, die sich beispielsweise durch die Ausgangsleistung einer Beleuchtungslichtquelle, zu- und abschalten von Lichtquellen, eine Verstärkung des Empfangssignals oder eine Belichtungszeit beeinflussen lässt.

Die Auswertungseinheit ist bevorzugt dafür ausgebildet, als erste Verteilung eine Wahrscheinlichkeitsverteilung zu bilden, indem sie als Messgröße eine jeweilige Wahrscheinlichkeit bestimmt, dass ein aus dem Empfangssignal abgeleiteter Wert in einem festgelegten Bereich liegt. Für eine Optimierung von Sensoreinstellungen ist häufig nicht relevant, welche Absolutwerte eine Messgröße annimmt, sondern ob sie sich in einem spezifizierten Wertebereich bewegt oder nicht. Das kann besonders einfach über eine Wahrscheinlichkeitsverteilung erfasst werden. Der festgelegte Bereich kann auch binär sein, d.h. eine Wahrscheinlichkeit bestimmt werden, ob ein binärer Wert bei Eins liegt oder nicht.

Die Auswertungseinheit ist bevorzugt dafür ausgebildet, einem Objekt anhand des für das Objekt gemessenen Objektabstands die Messgröße aus der ersten Verteilung bei diesem Objektabstand als erwartete Messgröße zuzuordnen. Das ist eine Art Umkehrung des bisherigen Vorgehens. Bisher wurde jeweils die Messgröße und ein zugehöriger Objektabstand erfasst, um so einen Datenpunkt der ersten Verteilung zu finden. Nun wird die erste Verteilung umgekehrt ausgenutzt, um bei einem aktuell gemessenen Objektabstand die Messgröße entsprechend der ersten Verteilung zu unterstellen, also anhand der ersten Verteilung eine Annahme für die Messgröße des aktuell erfassten Objekts zu treffen. Es wird also davon ausgegangen, dass sich das aktuell erfasste Objekt hinsichtlich der Messgröße so verhält wie statistisch die bisher mit diesem Objektabstand erfassten Objekte. Die Zuordnung kann sich im weiteren Verlauf noch als falsch herausstellen, d. h. dieses spezielle Objekt verhält sich nicht entsprechend der ersten Verteilung beziehungsweise es verwirklicht sich die einer Statistik und einer Wahrscheinlichkeit innewohnende Möglichkeit einer Abweichung im Einzelfall.

Die Auswertungseinheit ist bevorzugt dafür ausgebildet, die erwartete Messgröße mit der tatsächlich für das Objekt aus dem Empfangssignal bestimmten Messgröße zu vergleichen. Ergibt sich dabei eine signifikante Abweichung um mehr als eine Toleranz, so ist eine denkbare Schlussfolgerung, dass der Sensor nicht optimal eingestellt ist. Ein anderer vorteilhafter Rückschluss betrifft aber das Objekt selbst, das ein erwartetes Qualitätskriterium nicht erfüllt, vor allem wenn für die Messgröße beim gemessenen Objektabstand bisher gemäß der ersten Verteilung eine hohe Wahrscheinlichkeit für die Messgröße bestimmt war und dies nur bei diesem individuellen Objekt ganz anders ist. Ein Beispiel für ein nicht erfülltes Qualitätskriterium ist ein schlecht gedruckter oder beschädigter Code. Der Sensor kann eine diesbezügliche Warnung ausgeben oder die Information speichern. Konkret im Beispiel eines optischen Codes wird dann dem Codeinhalt eine Information hinzugefügt, dass der Code vermutlich beeinträchtigt ist.

Die Messgröße ist vorzugsweise ein Kontrastmaß. Darunter fallen diverse an sich bekannte Möglichkeiten, den Kontrast zu beurteilen. Damit wird eine Fokuslage oder eine Justierung der Optik beziehungsweise des Sensors selbst beurteilt. Wie bei fast allen Messgrößen kann das Kontrastmaß direkt ausgewertet werden, oder es wird die Wahrscheinlichkeit bestimmt, ob das Kontrastmaß in einem spezifizierten Wertebereich liegt oder nicht.

Die Messgröße ist bevorzugt ein Intensitätsmaß. Auch dieser Begriff ist erst einmal weit aufzufassen, es ist ein Maß, um eine angemessene Belichtung ohne Unter- oder Überbelichtung festzustellen. Dazu eignen sich insbesondere die Grauwerte eines Bildes, der minimale oder maximale Grauwert, der mittlere Grauwert und dergleichen. Auch das Intensitätsmaß kann direkt oder über eine Wahrscheinlichkeit bewertet werden, ob es in einem spezifizierten Wertebereich liegt.

Der Sensor ist bevorzugt ein Codeleser, dessen Auswertungseinheit dafür ausgebildet ist, aus dem Empfangssignal eine Codeinformation eines optischen Codes auszulesen. Das kann ein Barcodescanner sein, der einen Lichtsender zum Aussenden eines Lesestrahls sowie eine bewegliche Ablenkeinheit aufweist, um den Lesestrahl periodisch in dem Erfassungsbereich abzulenken. Aus dieser Abtastung resultiert ein zeitabhängiges Empfangssignal, dessen Amplitude gemäß dem jeweiligen Scanwinkel die Hell-Dunkelabstände des Barcodes abbildet. Alternativ ist der Codeleser kamerabasiert. In zahlreichen wichtigen Anwendungen befinden sich Codeleser und Erfassungsbereich in Relativbewegung, etwa wenn ein Handgerät über den Erfassungsbereich geschwenkt wird oder wenn der Codeleser an einem Förderband installiert wird, um Codes auf darauf geförderten Objekten zu lesen. Derartige Relativbewegungen sorgen dafür, dass ein Objekt und ein Codebereich sukzessive zeilenweise erfasst wird, so dass nicht nur Bildzeilen, sondern zweidimensionale Bilder entstehen. Das gilt für Codescanner und eine Zeilenkamera in einem kamerabasierten Codeleser gleichermaßen. Es sind ebenso zweidimensionale Bildsensoren denkbar, die unmittelbar einen größeren Bildabschnitt aufnehmen.

Die Messgröße ist bevorzugt eine Erfolgsbewertung für das Lesen eines Codes. Für einen individuellen Lesevorgang ist das vorzugsweise eine binäre Messgröße, die auch als Erfolg (GoodRead) und Lesefehler (NoRead) bezeichnet wird. Auch die Leserate, also letztlich der Quotient aus Anzahl der GoodReads und Anzahl der insgesamt erfassten Codes, ist eine Erfolgsbewertung, und es sind weitere Maße vorstellbar.

Die Messgröße weist bevorzugt eine Codeeigenschaft auf. Zu den Codeeigenschaften zählen die Größe des gesamten Codes, dessen Modulgröße, die Position des Codes und die Art des Codes.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors zur Erzeugung von Objektinformationen mit zusätzlicher Abstandsmessung;
- Fig. 2: eine schematische dreidimensionale Übersichtsdarstellung der beispielhaften Montage eines optoelektronischen Sensors über einem Förderband, auf dem Objekte gefördert werden;
- Fig. 3: eine schematische Darstellung von Objekten in verschiedenen Abständen zur Erläuterung einer bedingten Wahrscheinlichkeit, dass in einem bestimmten Objektabstand ein Code erfolgreich gelesen werden kann;
- Fig. 4: eine beispielhafte Darstellung einer Wahrscheinlichkeitsverteilung, dass Codes in einem jeweiligen Objektabstand erfolgreich gelesen werden, einer Häufigkeitsverteilung der Objektabstände selbst und des Produkts beider Verteilungen;
- Fig. 5: eine schematische Darstellung von Objekten in verschiedenen Abständen zur Erläuterung der Überwachung von Intensitätsbedingungen;
- Fig. 6: eine beispielhafte Darstellung ähnlich Figur 4 einer Wahrscheinlichkeitsverteilung, dass Intensitätsbedingungen in einem jeweiligen Objektabstand in einem spezifizierten Bereich bleiben, einer Häufigkeitsverteilung der Objektabstände selbst und des Produkts beider Verteilungen;
- Fig. 7: eine beispielhafte Darstellung einer Abwandlung von Figur 6, in welcher die Wahrscheinlichkeitsverteilung durch eine abstandsabhängige Verteilung von Grauwerten ersetzt ist; und
- Fig. 8: eine schematische Darstellung einer Aufnahmesituation, in der sich Objekte mit bestimmten Höhen und folglich Objektabständen wiederholen.

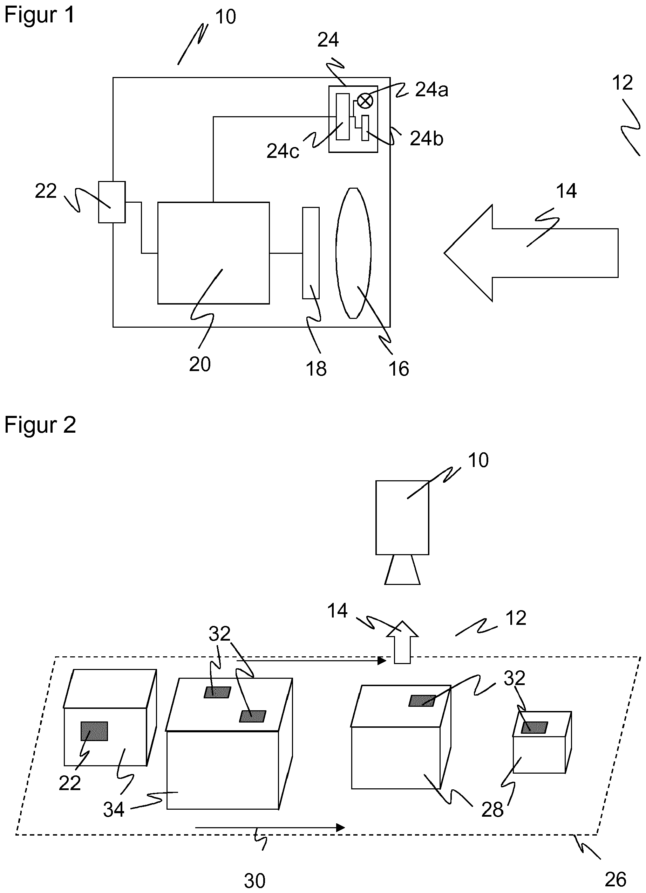

Figur 1 zeigt eine schematische Darstellung eines optoelektronischen Sensors 10. Aus einem Erfassungsbereich 12 wird Empfangslicht 14 durch eine Empfangsoptik 16 von einen Lichtempfänger 18 empfangen und dort ein entsprechendes Empfangssignal erzeugt. Das Empfangssignal wird in einer Auswertungseinheit 20 ausgewertet, um Objektinformationen eines Objekts in dem Erfassungsbereich 12 zu gewinnen. Diese Objektinformationen, aber auch andere Informationen wie Bilddaten, Hilfsgrößen, Parameter und dergleichen, werden über eine Schnittstelle 22 mit einem externen Gerät ausgetauscht, beispielsweise einer nicht dargestellten übergeordneten Steuerung.

Zusätzlich zu dem eigentlichen Erfassungssystem mit dem Lichtempfänger 18 ist ein Abstandssensor 24 vorgesehen. In dieser Ausführungsform handelt es sich um einen autarken, kompakten Lichtlaufzeitsensor mit einer Lichtquelle 24a, einem zweiten Lichtempfänger 24b und einer Abstandsmesseinheit 24c. In einem pulsbasierten Lichtlaufzeitverfahren sendet die Lichtquelle 24a Lichtpulse aus, die von dem zweiten Lichtempfänger 24b nach Reflexion an dem Objekt in dem Erfassungsbereich 12 wieder empfangen werden, und die Abstandsmesseinheit 24c bestimmt die Lichtlaufzeit zwischen Aussenden und Empfangen des Lichtpulses. Alternativ wird in einem Phasenverfahren ein amplitudenmoduliertes Lichtsignal ausgesandt und dessen Phasenverschiebung bei Empfang bestimmt. In anderen Ausführungsformen übernehmen Lichtempfänger 18 und Auswertungseinheit 20 zusätzlich zu der Gewinnung von Objektinformationen auch die Abstandsmessung oder unterstützen sie, insbesondere indem der Lichtempfänger 18 auch als zweiter Lichtempfänger 24b fungiert beziehungsweise die Auswertungseinheit 20 auch die Lichtlaufzeitauswertung der Abstandsmesseinheit 24c übernimmt.

Der Sensor 10 ist vorzugsweise eine Kamera, bei dem der Lichtempfänger 18 als zeilen- oder matrixförmiger Bildsensor ausgebildet ist. Die Kamera ist insbesondere als Codeleser ausgebildet, indem die Auswertungseinheit 20 in der Lage ist, in den aufgenommenen Bildern Codebereich zu identifizieren und die dort codierten Informationen auszulesen. Anstelle eines solchen kamerabasierten Codelesers ist aber auch ein Barcodescanner eine mögliche Ausführungsform des Sensors 10. Andere nicht abschließende Beispiele für den Sensor 10 sind schaltende Systeme wie hintergrundausblendende Taster, die auf Objekte mit bestimmten Eigenschaften reagieren, sowie Farb- oder Kontrasttaster. Außerdem sind weitere Elemente des Sensors 10 möglich, wie eine eigene, nicht gezeigte Beleuchtung.

Figur 2 zeigt eine bevorzugte Montage des hier nur noch vereinfacht als Kamerasymbol gezeigten Sensors 10 über einem Förderband 26, wobei der Sensor 10 hier stellvertretend als kamerabasierter Codeleser ausgebildet ist, das Kamerasymbol aber weder einen Barcodescanner noch ein vergleichbares Anwendungsbeispiel eines anderen Sensors 10 ausschließen soll. Eine stationäre Anwendung des Sensors 10 an einem Förderband 26 ist vorteilhaft, aber die Erfindung nicht darauf beschränkt. Das Förderband 26 fördert Objekte 28, wie durch den Pfeil 30 angedeutet, durch den Erfassungsbereich 12 des Sensors 10. Die Objekte 28 tragen an ihren Außenflächen Codebereiche 32, die von dem Sensor 10 erfasst und ausgelesen werden. Diese Codebereiche 32 können von dem Sensor 10 nur dann erkannt werden, wenn sie auf der Oberseite oder zumindest von oben sichtbar angebracht sind. Daher kann abweichend von der Darstellung in Figur 2 zum Lesen eines etwa seitlich oder unten angebrachten Codes 34 eine Mehrzahl von Sensoren 10 aus verschiedenen Richtungen montiert sein. Die Anordnung der mehreren Sensoren 10 zu einem Lesesystem erfolgt in der Praxis meist als Lesetunnel.

Der Sensor 10 erfasst über den Lichtempfänger 18 und Auswertung von dessen Empfangssignal eine Objektinformation als das primäre Ziel der Anwendung. Das ist im Beispiel eines Codelesers vornehmlich der Codeinhalt, in anderen Fällen kann eine ganz andere Objektinformation gesucht sein, wie Farb-, Helligkeits-, Geometrie-, Positions- oder sonstige optisch erfassbare Eigenschaften. Es wird außerdem aus dem Empfangssignal eine Messgröße bestimmt, die nur ausnahmsweise der Objektinformation entspricht und in den meisten Fällen eine Hilfsgröße ist, wie ein Kontrast, ein mittlerer Grauwert, die Modul- oder Pixelgröße eines Codes 32 oder ob der Code 32 gelesen werden konnte (Goodread / Noread). Zudem wird für das jeweilige Objekt 28, dessen Objektinformation erfasst wird, mit dem Abstandssensor 24 ein Objektabstand bestimmt.

Dies wird über einen wählbaren Zeitraum beziehungsweise eine wählbare Vielzahl erfasster Objekte 28 wiederholt, und durch statistische Auswertung wird erkannt, ob der Sensor 10 durch Veränderung seiner Einstellungen oder seiner Ausrichtung optimiert werden kann. Auch das Erkennen einer Verschlechterung und eine Behebung der Ursache, wie Nachjustieren, Reinigung oder im Extremfall Gerätetausch wird in diesem Zusammenhang als Optimierung aufgefasst. Die statistische Erfassung, Auswertung und die daraus gezogenen Schlüsse für eine Optimierung werden nun an Ausführungsbeispielen erläutert.

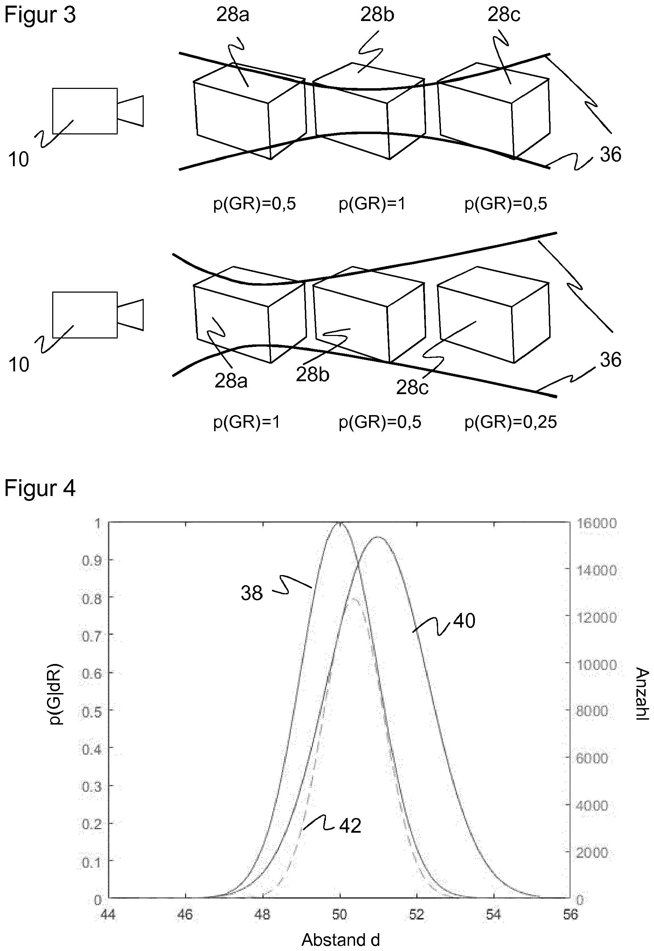

Figur 3 zeigt eine schematische Darstellung von Objekten 28a-c in verschiedenen Abständen von dem Sensor 10. Im oberen Teil der Figur 3 die Empfangsoptik 16 auf die scharfe Erfassung eines Objekts 28b in mittlerem Abstand, im unteren Teil auf die scharfe Erfassung eines Objekts 28a in kurzem Abstand eingestellt. Die Tiefenschärfenbereiche 36 sind über den jeweiligen gegenseitigen Abstand der dafür gezeigten Linien angedeutet. Statt als Tiefenschärfenbereich 36 der Empfangsoptik 16 kann die Darstellung ebenso als Tiefenschärfenbereich 36 einer Sendeoptik aufgefasst werden, etwa als Größe des Sendelichtflecks im Falle eines Barcodescanners.

Die hier beispielhaft betrachtete Messgröße ist die binäre Erfolgsbewertung GR (GoodRead), die genau dann den Wert Eins annimmt, wenn ein Code 32 gelesen werden konnte. Diese Erfolgsbewertung wird ebenso wie ihr Gegenstück NoRead auch herkömmlich erfasst, aber immer nur für ein konkretes Objekt 28. Über eine Vielzahl von Objekten 28 wird bisher nur die Leserate erfasst, also dass ein bestimmter Prozentsatz von Codes 32 gelesen werden konnte, was zwar die Leistungsfähigkeit gut beschreibt, aber keine Fehleranalyse ermöglicht.

Im Beispiel der Figur 3 wird nun eine bedingte Wahrscheinlichkeit p(GR|d) bestimmt, die angibt, mit welcher Wahrscheinlichkeit jeweils bei einem bestimmten Abstand d ein GoodRead resultiert. Um diese bedingte Wahrscheinlichkeit zu erfassen, wird jeweils bei einer Erfassung eines Objekts 28 der Code 32 gelesen und das zugehörige GR dem für dieses Objekt 28 gemessenen Abstand zugeordnet. So entsteht mit jedem weiteren Objekt 28 ein neuer Datenpunkt, und aus der nach und nach erfassten Vielzahl von Datenpunkten wird eine Verteilung gebildet, welche die gesuchte bedingte Wahrscheinlichkeit schätzt.

Tatsächlich hängt GR von einer Vielzahl von Bedingungen ab. Neben der gezeigten Tiefenschärfe 36, die vor allem bei Fix-Fokus-Geräten eine Rolle spielt, da ein Autofokus die Tiefenschärfe individuell an jedes Objekt 28 anpasst, zählen dazu eine nicht angepasste Beleuchtung mit Über- und Unterbelichtung, eine vom Abstand abhängige Pixelgröße des erfassten Codes 32 und auch zahlreiche nicht vom Sensor 10 beeinflussbare Bedingungen wie die Codequalität, die Ausrichtung des Codes 32 und die Ebenheit des Untergrundes, eine mögliche Beschädigung oder eine Verdeckung insbesondere durch eine glänzende Folie.

Dennoch sei für das Beispiel der Figur 3 vereinfachend angenommen, dass GR allein von der Tiefenschärfe abhängt. Dort sind nur drei Objekte 28a-c in den Abständen A, B und C gezeigt, wobei in der Praxis selbstverständlich auch die Zwischenwerte angenommen werden können. Befindet sich wie im oberen Teil der Figur 3 ein Objekt 28b im Fokus, so beträgt für dessen Abstand d=B die bedingte Wahrscheinlichkeit p(GR|B)=1, da ja GR vereinfachend nur von der Tiefenschärfe abhängen soll. In den anderen Abständen A, C fällt die Wahrscheinlichkeit auf den willkürlich gewählten Wert p(GR|A)=p(GR|C)=0,5 ab. Nimmt man ungefähr eine Gleichverteilung für die Abstände der Objekte 28a-c an, so ist der Tiefenschärfenbereich 36 hier gut gewählt.

Im unteren Teil der Figur 3 beträgt nun für das nahe Objekt 28a im Abstand A die bedingte Wahrscheinlichkeit p(GR|A)=1. Das mittlere Objekt 28b im Abstand B ist nur etwas außer Fokus mit p(GR|B)=0,5, das ferne Objekt 28c im Abstand C aber schon deutlich mit p(GR|C)=0,25. Hier gibt es folglich Optimierungspotential.

Figur 4 verallgemeinert das Beispiel der Figur 3 und zeigt eine Verteilung 38 der bedingten Wahrscheinlichkeit p(GR|d) über dem Abstand, die rein beispielhaft als Gaussverteilung angenommen wird. Als Vergleichsgröße wird eine weitere Verteilung 40 der Abstände der Objekte 28 selbst gebildet. Bei einer Montage des Sensors 10 wie in Figur 2 von oben entsprechen die Abstände der Objekte 28 zugleich deren Höhe, die durch Differenzbildung anhand der Montagehöhe des Sensors 10 leicht berechnet wird. Auch die weitere Verteilung 40 wird beispielhaft als Gaussverteilung angenommen. Als mögliche Bewertung der Übereinstimmung beider Verteilungen 38, 40 ist auch noch deren Produkt 42 eingezeichnet.

Wie leicht zu erkennen, ist der Sensor 10 in diesem Beispiel nicht optimiert. Dafür müssten die beiden Verteilungen 38, 40 im Idealfall genau überlappen, so dass die beste Leistungsfähigkeit für die am häufigsten auftretenden Fälle erreicht ist. Der Sensor 10 kann das Optimierungspotential signalisieren oder, soweit zugänglich, selbst seine Einstellungen verändern, um es auszuschöpfen. Beispielsweise wird eine iterative Optimierung anhand des Produkts 42 vorgenommen oder ein Maximum beziehungsweise Schwerpunkt der Verteilungen 38, 40 ermittelt und in Übereinstimmung gebracht.

Im konkreten Beispiel ist die Messgröße die binäre Erfolgsbewertung GR beziehungsweise deren bedingte Wahrscheinlichkeit p(GR|d) und der zu verändernde Parameter der Tiefenschärfenbereich 36 und somit die Fokuslage der Empfangsoptik 16 oder alternativ einer Sendeoptik. Die Schlussfolgerung, welche die Auswertungseinheit 20 aus den Verteilungen 38, 40 zieht, ist eine angestrebte Verschiebung der Fokuslage um einen bestimmten Abstand. Bei einem Fix-Fokus-Gerät wird diese Verschiebung angezeigt. Es ist auch möglich, dass der Sensor 10 die Umrechnung einer Verschiebung Δd der Fokuslage in eine konkrete Betätigungsanweisung übersetzen kann wie "0,2 Drehungen nach links". Das hängt von dem Linsenmodell und gegebenenfalls weiteren Modellen wie dem Belichtungs/Abstand-Modell sowie dem Verstellmechanismus der Empfangsoptik 16 ab und ist daher vorzugsweise als Tabelle hinterlegt.

Auf diese Weise wird eine Optimierung für die Fokuseinstellung erkannt und vorgeschlagen. Es gibt viele mögliche Gründe, warum es Optimierungsbedarf gibt, sei es eine ungenügende Justierung beim Einrichten, eine Veränderung der Objekte 28, die nun eine andere Abstandsverteilung aufweisen, eine plötzliche Veränderung durch Fehlverhalten von Mitarbeitern oder Umgebungsfluktuationen wie saisonale Temperaturunterschiede sowie Beschädigung oder Alterung von Sensorbauteilen.

Das Erkennen von Optimierungsbedarf aus zusätzlich gemessenen Objektabständen und Zuordnung einer Messgröße zu diesen Objektabständen ist bisher sehr konkret anhand der Messgröße GR beziehungsweise deren bedingter Wahrscheinlichkeit p(GR|d) und einer Anpassung der Fokuslage beschrieben worden. Die statistische Bewertung anhand von abstandsabhängigen Verteilungen insbesondere wie in Figur 4 ist aber sehr viel allgemeiner und variabler. Zum einen lässt sich die Fokuslage auch durch andere Messgrößen bewerten als eine Erfolgsbewertung, etwa über ein Kontrastmaß K, das direkt oder als bedingte Wahrscheinlichkeit betrachtet wird, ob es in einem spezifizierten Wertebereich [Kₛₒₗₗ-Toleranz, KₛₒₗI+Toleranz] bleibt. Nicht nur die Messgröße ist veränderbar, sondern auch die mögliche Änderung für den Sensor 10, die bisher die Fokuslage oder in direkter Verallgemeinerung eine Dejustierung der Optik oder des ganzen Sensors 10 war.

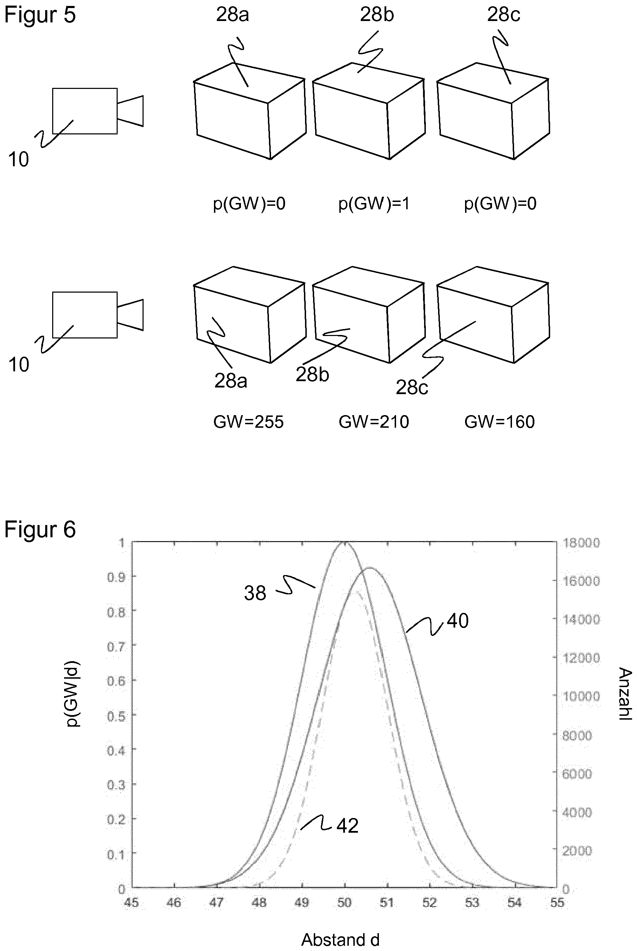

Figur 5 illustriert in einer Darstellung ähnlich Figur 3 ein weiteres Ausführungsbeispiel, das sich mit einer Intensitätsbewertung befasst. Ähnlich wie im Falle eines Fixfokus' ist eine statistische Optimierung vor allem dann hilfreich, wenn der Sensor 10 nicht in der Lage ist, seine Beleuchtungsparameter hochdynamisch an die gemessene Abstandsinformation für das aktuell erfasste Objekt 28 anzupassen. Als konkrete Messgröße wird hier ein mittlerer Grauwert GW herangezogen. Die von dem Sensor 10 effektiv erfasste Intensität hängt von vielen Faktoren wie der Beleuchtung, dem Remissionsvermögen der Objekte 28, deren Abstand, einem Verstärkungsfaktor im Empfangspfad oder der Belichtungszeit ab. Es ist sinnvoll, diejenigen Parameter wie Beleuchtungsstrom, Gain und Belichtungszeit, auf die der Sensor 10 einen Einfluss hat, an die tatsächlich auftretenden Objektabstände anzupassen, damit die Intensität für gute Decodierergebnisse möglichst konstant bleibt und jedenfalls Unter- oder Überbelichtung minimiert wird.

Wie im oberen Teil der Figur 5 kann jeweils eine bedingte Wahrscheinlichkeit p(GW|d) bestimmt werden, dass GW im gewünschten Bereich bleibt. Figur 6 zeigt ähnlich Figur 4 eine entsprechende verallgemeinerte Verteilung 38 von p(GW|d) über dem Abstand, zusammen mit einer Verteilung 40 der Abstände der Objekte 28 selbst und dem Produkt 42 beider Verteilungen 38, 40. Es besteht Optimierungspotential durch eine höhere Intensität, sei es durch stärkere Ausleuchtung des Erfassungsbereichs 12, einen höheren Verstärkungsfaktor oder eine längere Belichtungszeit. Das richtige Ausmaß lässt sich erneut beispielsweise durch iterative Optimierung oder Bestimmung der Mittel- oder Schwerpunkte der Verteilungen 38, 40 auffinden, insbesondere unter Einbeziehung des Produkts 42.

Anstelle einer bedingten Wahrscheinlichkeit kann auch das Intensitätsmaß selbst betrachtet werden. Dies ist im unteren Teil der Figur 5 gezeigt. Bei einem nahen Objekt 28a wird beispielhaft GW=255, was bei einem 8-Bit-Wertebereich dem Extremfall einer vollständigen Blendung entspricht. Für ein mittleres Objekt 28b ist hier GW=210, für ein fernes Objekt 28c GW=160. Wie aus den bedingten Wahrscheinlichkeiten p(GW) im oberen Teil der Figur 5 erkennbar, liegt GW=210 im angestrebten Bereich des Intensitätsmaßes, während GW=255 als überbelichtet und GW=160 als unterbelichtet angesehen wird. Daraus resultieren die Beispielwerte p(GW|A)=p(GW|C)=0 und p(GW|B)=1.

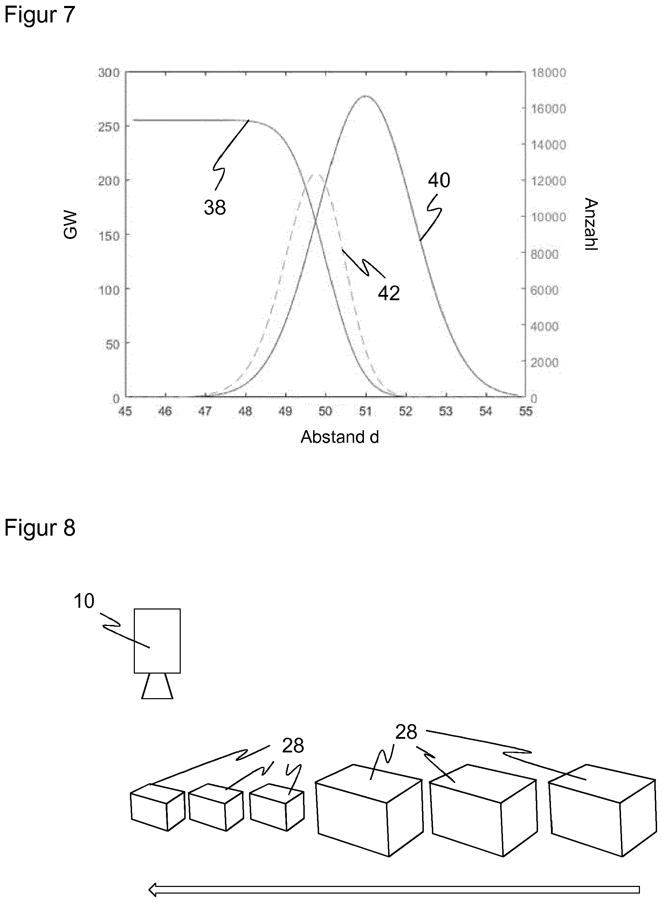

Figur 7 zeigt die zugehörige Verteilung 38 der Grauwerte über dem Abstand. Eine Überbelichtung bei ganz nahen Abständen wird immer auftreten, daher kann die Verteilung 38 nicht mit der Verteilung 40 der Objektabstände in Übereinstimmung gebracht werden, sehr wohl aber in bestmögliche Übereinstimmung vorzugsweise anhand des Produkts 42. Deshalb lassen sich optimale Beleuchtungsparameter in Sensoren 10 oder Anwendungssituationen, die keine hochdynamisch Beleuchtungsanpassung ermöglichen, sowohl aus dem Intensitätsmaß GW selbst wie aus der zugehörigen bedingten Wahrscheinlichkeit p(GW|d).

In den beiden Beispielen können nun die optimalen Beleuchtungsparameter für eine Applikation ermittelt werden, die keine dynamischen Änderungen erlaubt. Auf diesem Weg werden auch Verschleiß- und Verschmutzungserscheinungen der Beleuchtung, des Lichtempfänger 18, der Empfangsoptik 16 und dergleichen kompensiert.

Figur 8 illustriert ein weiteres Ausführungsbeispiel. Hier wird angenommen, dass Objekte 28 mit einem gleichen Objektabstand, insbesondere einer gleichen Höhe, tatsächlich gleichartige Objekte sind. Ein besonders anschauliches Beispiel sind gleichartige Objekte 28, die einen gleichen Code 32 tragen. In Figur 8 erfasst der Sensor 10 zunächst drei untereinander gleiche kleine Objekte 28 und dann drei untereinander gleiche höhere Objekte 28, wobei die Reihenfolge aufgrund der statistischen Verarbeitung keine Rolle spielt und die Objekte 28 ebenso durcheinandergemischt auftreten dürfen. Die Objekte 28 mit jeweils gleicher Höhe tragen auch einen Code 32 mit gleicher Codegröße, damit Modulgröße, sowie gleichem Codetyp und womöglich gleicher oder zumindest ähnlicher Codeposition und -ausrichtung.

Analog dem bisher erläuterten Vorgehen wird eine Verteilung der bedingten Wahrscheinlichkeit gebildet, in welchem Abstand bestimmte Codeeigenschaften vorliegen. Nun ist einerseits denkbar, den Sensor 10 pauschal möglichst gut an diese Codeeigenschaften anzupassen, so wie bisher für Optik- und Beleuchtungseigenschaften. Es ist aber auch möglich, zu dem gemessenen Abstand des aktuell erfassten Objekts 28 die wahrscheinlichen Codeeigenschaften aus der Verteilung herauszulesen. Das ist gleichsam eine Umkehrung des bisherigen Vorgehens, indem die bereits gebildete Verteilung für eine Vorhersage anhand eines einzelnen gemessenen Objektabstands genutzt wird. In dem einfachen Beispiel der Figur 8 nimmt die Verteilung nur für wenige, hier zwei, diskrete Abstände Werte ungleich Null an, so dass es sich effektiv um eine Fallunterscheidung handelt.

Jedenfalls wird der Verteilung eine Annahme an die Codeeigenschaften des gerade zu lesenden Codes 32 entnommen, denn die Verteilung enthält die Information, dass ein Objekt 28 mit einer bestimmten Höhe wahrscheinlich einen Code 32 mit den auch bisher am häufigsten aufgetretenen Codeeigenschaften aufweist. Diese Informationen erlauben dem Softwaredecoder eine wesentlich schnellere Dekodierung, der zunächst den Code 32 in einer bestimmten ROI (region of interest) sucht und einen Leseversuch für einen bestimmten Codetyp mit bestimmter Modulgröße versucht. Wenn das scheitert, können weitere Leseversuche ohne diese Annahmen folgen.

In einem weiteren Ausführungsbeispiel ohne eigene Illustration werden aus unterschiedlichen Zeitintervallen Verteilungen der Objektabstände gebildet und untereinander verglichen. Tritt bei diesem zeitlichen Abgleich ein signifikanter Unterschied auf, so ist möglicherweise die Ausrichtung des Sensors 10 etwa durch einen Stoß verändert worden, und der Sensor 10 zeigt an, dass die Ausrichtung überprüft werden sollte. Anschließend kann wie oben zu Figur 3 beschrieben die Justage der Optik verbessert werden.

In einem weiteren Ausführungsbeispiel gibt der Sensor 10 eine Rückmeldung über erwartete Objekteigenschaften, insbesondere eine Codequalität. Dazu eignen sich Kontrast oder Erfolgsbewertung des Lesevorgangs als Messgröße. Ähnlich wie im Beispiel der Figur 8 wird für das gerade erfasste Objekt 28 anhand dessen Objektabstands ein aus Statistik zu erwartender Kontrast oder Leseerfolg aus der bereits vorliegenden Verteilung bestimmt. Außerdem wird der tatsächliche Kontrast bestimmt beziehungsweise ein Lesevorgang ausgeführt und bewertet. Erwartung und Messung werden dann miteinander verglichen. Vereinfacht gesprochen ist hier der Gedanke, dass es am Code 32 liegen muss, wenn bisher bei diesem Abstand die meisten oder gar alle Codes 32 gelesen werden konnten und nur der aktuell erfasste Code 32 nicht. Mit einer Betrachtung der Verlässlichkeit der Erwartung mit einem üblichen Maß wie der Standardabweichung kann die Zuordnung eines Lesefehlers zu dem Sensors 10 oder dem Code 32 weiter verbessert werden.

Etwas konkreter können insbesondere zwei Fälle auftreten. Im ersten Fall ist der Code 32 nicht gut genug gedruckt und weist zu wenig Kontrast auf. Da normalerweise alle Codes 32 in diesem Abstand gelesen werden, ist es wahrscheinlich, dass der Code 32 selbst die Ursache dafür ist, dass der Codeinhalt nicht gelesen werden konnte. Wenn zudem der Kontrast signifikant von seinem Normalwert abweicht, ist mangelnder Kontrast und damit schlechte Druckqualität wohl der eigentliche Grund. Im zweiten Fall tritt ebenfalls ein Lesefehler (NoRead) auf, obwohl in diesem Abstand Codes 32 üblicherweise gelesen werden können. Zugleich liegt aber der Kontrast im Erwartungsbereich, und deshalb ist es wahrscheinlich, dass der Code 32 beschädigt ist.

Abschließend sollen noch einmal die beispielhaft beschriebenen Messgrößen und zu optimierenden Sensoreinstellungen übersichtlich zusammengestellt werden.

| ***Messgröße*** | ***Änderung*/*Sensoreinstellung*/*Rückmeldung*** |
|---|---|
| Kontrast, Leserate, GoodRead, NoRead, Bildschärfe | Fokuslage; Predictive Maintenance noch vor Ausfallserscheinungen, ob die Empfangsoptik oder sonstige optische Elemente sich mit der Zeit verändert haben. |
| Mittlerer Grauwert, maximaler Grauwert, minimaler Grauwert, sonstige Grauwerte; allgemein Intensitätsmaß | Einstellen zur optimalen Beleuchtung bei zeitkritischen Anwendungen, die keine Dynamik erlauben; Predictive Maintenance, ob die Beleuchtungsintensität mit der Zeit abgenommen hat |
| Codegröße, -art, -position, Modulgröße | Informationen für den Decoder für schnelleres Dekodieren |
| Objektabstand, Höhenverteilung der Objekte | Installationsänderung der Kamera bei signifikanter Änderung mit der Zeit (wie Stoß gegen den Sensor) |
| Kontrast, Leserate, GoodRead, NoRead, Bildschärfe | Qualität des Codes mit Fehleranalyse |

Diese Zusammenstellung ist aber nicht abschließend. Trotz der exemplarischen Betrachtungen sind weitere Messgrößen, die ein optoelektronischer Sensor 10 erfassen kann, Optimierungen von möglichen Einstellungen eines Sensors 10 und auch Kombinationen von Messgrößen und Optimierungen über Ausführungsbeispiele hinweg denkbar. Außerdem ist die Erfindung nicht auf bestimmte Wahrscheinlichkeitsverteilungen beschränkt, auch wenn bisweilen eine Gleichverteilung oder Gaussverteilung als Beispiel herangezogen wurde.

## Patentansprüche

1. Optoelektronischer Sensor (10), insbesondere Kamera, zur wiederholten Erfassung von Objekten (28) in unterschiedlichem Objektabstand, mit einem Lichtempfänger (18) zum Erzeugen eines Empfangssignals aus Empfangslicht (14), mit einer Auswertungseinheit (20) zum Erzeugen einer Objektinformation aus dem Empfangssignal sowie mit einem Abstandssensor (24) zur Bestimmung des Objektabstands zu einem jeweiligen Objekt (28),
**dadurch gekennzeichnet,**
**dass** die Auswertungseinheit (20) dafür ausgebildet ist, aus dem Empfangssignal zu einem Objekt (28) eine Messgröße zu gewinnen, die Messgröße dem für das Objekt (28) gemessenen Objektabstand zuzuordnen und nach Erfassung einer Vielzahl von Objekten (28) eine erste Verteilung (38) der Messgröße über den Objektabstand zu bilden.

2. Sensor (10) nach Anspruch 1,
wobei die Auswertungseinheit (20) dafür ausgebildet ist, eine zweite Verteilung (40) der Objektabstände zu bilden.

3. Sensor (10) nach Anspruch 1 oder 2,
wobei die Auswertungseinheit (20) dafür ausgebildet ist, als erste Verteilung (38) eine Verteilung der Objektabstände und als zweite Verteilung (40) eine Verteilung der Objektabstände in einem anderen Zeitabschnitt zu bilden.

4. Sensor (10) nach Anspruch 2 oder 3,
wobei die Auswertungseinheit (20) dafür ausgebildet ist, die erste Verteilung (38) und die zweite Verteilung (40) zu vergleichen und danach Änderungen des Sensors (10) vorzunehmen oder vorzuschlagen, um die Übereinstimmung der Verteilungen (38, 40) zu verbessern.

5. Sensor (10) nach Anspruch 4,
wobei die Änderung eine optische Nachjustierung ist, insbesondere einer Fokuslage.

6. Sensor (10) nach Anspruch 4 oder 5,
wobei die Änderung eine Anpassung der Beleuchtungsintensität ist.

7. Sensor (10) nach einem der vorhergehenden Ansprüche,
wobei die Auswertungseinheit (20) dafür ausgebildet ist, als erste Verteilung (38) eine Wahrscheinlichkeitsverteilung zu bilden, indem sie als Messgröße eine jeweilige Wahrscheinlichkeit bestimmt, dass ein aus dem Empfangssignal abgeleiteter Wert in einem festgelegten Bereich liegt.#

8. Sensor (10) nach einem der vorhergehenden Ansprüche,
wobei die Auswertungseinheit (20) dafür ausgebildet ist, einem Objekt (28) anhand des für das Objekt (28) gemessenen Objektabstands die Messgröße aus der ersten Verteilung (38) bei diesem Objektabstand als erwartete Messgröße zuzuordnen.

9. Sensor (10) nach einem der vorhergehenden Ansprüche,
wobei die Auswertungseinheit (20) dafür ausgebildet ist, die erwartete Messgröße mit der tatsächlich für das Objekt (28) aus dem Empfangssignal bestimmten Messgröße zu vergleichen.

10. Sensor (10) nach einem der vorhergehenden Ansprüche,
wobei die Messgröße ein Kontrastmaß ist.

11. Sensor (10) nach einem der vorhergehenden Ansprüche,
wobei die Messgröße ein Intensitätsmaß ist.

12. Sensor (10) nach einem der vorhergehenden Ansprüche,
wobei der Sensor (10) ein Codeleser ist, dessen Auswertungseinheit (20) dafür ausgebildet ist, aus dem Empfangssignal eine Codeinformation eines optischen Codes (32) auszulesen.

13. Sensor (10) nach Anspruch 12,
wobei die Messgröße eine Erfolgsbewertung für das Lesen eines Codes (32) ist.

14. Sensor (10) nach Anspruch 12 oder 13,
wobei die Messgröße eine Codeeigenschaft aufweist.

15. Verfahren zur wiederholten optischen Erfassung von Objekten (28) in unterschiedlichem Objektabstand, bei dem aus Empfangslicht (14) ein Empfangssignal erzeugt und ausgewertet wird, um eine Objektinformation zu gewinnen, und wobei zusätzlich ein Objektabstand zu einem jeweiligen Objekt (28) bestimmt wird,
**dadurch gekennzeichnet,**
**dass** aus dem Empfangssignal zu einem Objekt (28) eine Messgröße gewonnen wird, die Messgröße dem für das Objekt (28) gemessenen Objektabstand zuzuordnen und nach Erfassung einer Vielzahl von Objekten (28) eine erste Verteilung (38) der Messgröße über den Objektabstand zu bilden.

## Claims

1. An optoelectronic sensor (10), in particular a camera, for a repeated detection of objects (28) at different object distances, the optoelectronic sensor (10) comprising a light receiver (18) for generating a received signal from received light (14), an evaluation unit (20) for generating object information from the received signal, and a distance sensor (24) for determining the object distance from a respective object (28), **characterized in that** the evaluation unit (20) is configured to acquire a measurement variable from the received signal with respect to an object (28), to associate the measurement variable with the object distance measured for the object (28), and to form a first distribution (38) of the measurement variable via the object distance after detecting a plurality of objects (28).

2. The optoelectronic sensor (10) in accordance with claim 1,
wherein the evaluation unit (20) is configured to form a second distribution (40) of the object distances.

3. The optoelectronic sensor (10) in accordance with claim 1 or 2,
wherein the evaluation unit (20) is configured to form a distribution of the object distances as the first distribution (38) and a distribution of the object distances in another time section as the second distribution (40).

4. The optoelectronic sensor (10) in accordance with claim 2 or 3,
wherein the evaluation unit (20) is configured to compare the first distribution (38) and the second distribution (40) and afterwards to carry out or propose changes of the sensor (10) to improve the matching of the distributions (38, 40).

5. The optoelectronic sensor (10) in accordance with claim 4,
wherein the change is an optical readjustment, in particular of a focal position.

6. The optoelectronic sensor (10) in accordance with claim 4 or 5,
wherein the change is an adaptation of the illumination intensity.

7. The optoelectronic sensor (10) in accordance with any of the preceding claims,
wherein the evaluation unit (20) is configured to form a probability distribution as the first distribution (38) in that it determines, as the measurement variable, a respective probability that a value derived from the received signal is in a fixed range.

8. The optoelectronic sensor (10) in accordance with any of the preceding claims,
wherein the evaluation unit (20) is configured to associate the measurement variable from the first distribution (38) at an object distance as the expected measurement variable with an object (28) based on an object distance measured for the object (28).

9. The optoelectronic sensor (10) in accordance with any of the preceding claims,
wherein the evaluation unit (20) is configured to compare the expected measurement variable with the measurement variable actually determined for the object (28) from the received signal.

10. The optoelectronic sensor (10) in accordance with any of the preceding claims,
wherein the measurement variable is a measure of contrast.

11. The optoelectronic sensor (10) in accordance with any of the preceding claims,
wherein the measurement variable is a measure of intensity.

12. The optoelectronic sensor (10) in accordance with any of the preceding claims,
wherein the sensor (10) is a code reader whose evaluation unit (20) is configured to read code information of an optical code (32) from the received signal.

13. The optoelectronic sensor (10) in accordance with claim 12,
wherein the measurement variable is an evaluation of success for the reading of a code (32).

14. The optoelectronic sensor (10) in accordance with claim 12 or 13,
wherein the measurement variable comprises a code property.

15. A method for the repeated optical detection of objects (28) at different object distances, wherein a received signal is generated from received light (14) and is evaluated to acquire object information, and wherein an object distance from a respective object (28) is additionally determined, **characterized in that** a measurement variable is acquired from the received signal with respect to an object (28), the measurement variable is associated with the object distance measured for the object (28), and a first distribution (38) of the measurement variable is formed via the object distance after detecting a plurality of objects (28).

## Revendications

1. Capteur optoélectronique (10), en particulier caméra, pour la détection répétitive d'objets (28) à différentes distances d'objet, comprenant un récepteur de lumière (18) pour générer un signal de réception à partir d'une lumière de réception (14), une unité d'évaluation (20) pour générer une information sur l'objet à partir du signal de réception, et un capteur de distance (24) pour déterminer la distance d'objet par rapport à un objet respectif (28), **caractérisé en ce que**
l'unité d'évaluation (20) est réalisée pour obtenir à partir du signal de réception une grandeur de mesure pour un objet (28), pour affecter la grandeur de mesure à la distance d'objet mesurée pour l'objet (28) et, après détection d'une pluralité d'objets (28), pour former une première distribution (38) de la grandeur de mesure sur la distance d'objet.

2. Capteur (10) selon la revendication 1,
dans lequel l'unité d'évaluation (20) est réalisée pour former une seconde distribution (40) des distances d'objet.

3. Capteur (10) selon la revendication 1 ou 2,
dans lequel l'unité d'évaluation (20) est réalisée pour former en tant que première distribution (38) une distribution des distances d'objet et en tant que seconde distribution (40) une distribution des distances d'objet dans un autre intervalle de temps.

4. Capteur (10) selon la revendication 2 ou 3,
dans lequel l'unité d'évaluation (20) est réalisée pour comparer la première distribution (38) et la seconde distribution (40), puis pour apporter ou proposer des modifications du capteur (10) afin d'améliorer la coïncidence des distributions (38, 40).

5. Capteur (10) selon la revendication 4,
dans lequel la modification est un réajustement optique, en particulier de la position focale.

6. Capteur (10) selon la revendication 4 ou 5,
dans lequel la modification est une adaptation de l'intensité d'éclairage.

7. Capteur (10) selon l'une des revendications précédentes,
dans lequel l'unité d'évaluation (20) est réalisée pour former en tant que première distribution (38) une distribution de probabilité en déterminant en tant que grandeur de mesure une probabilité respective qu'une valeur dérivée du signal de réception se trouve dans une plage définie.

8. Capteur (10) selon l'une des revendications précédentes,
dans lequel l'unité d'évaluation (20) est réalisée pour affecter à un objet (28), sur la base de la distance d'objet mesurée pour l'objet (28), la grandeur de mesure de la première distribution (38) comme une grandeur de mesure attendue, à cette distance d'objet.

9. Capteur (10) selon l'une des revendications précédentes,
dans lequel l'unité d'évaluation (20) est réalisée pour comparer la grandeur de mesure attendue avec la grandeur de mesure réellement déterminée pour l'objet (28) à partir du signal de réception.

10. Capteur (10) selon l'une des revendications précédentes,
dans lequel la grandeur de mesure est un niveau de contraste.

11. Capteur (10) selon l'une des revendications précédentes,
dans lequel la grandeur de mesure est un niveau d'intensité.

12. Capteur (10) selon l'une des revendications précédentes,
dans lequel le capteur (10) est un lecteur de code dont l'unité d'évaluation (10) est réalisée pour lire une information de code d'un code optique (32) à partir du signal de réception.

13. Capteur (10) selon la revendication 12,
dans lequel la grandeur de mesure est un taux de réussite pour la lecture d'un code (32).

14. Capteur (10) selon la revendication 12 ou 13,
dans lequel la grandeur de mesure présente une caractéristique de code.

15. Procédé pour la détection répétitive d'objets (28) à différentes distances d'objet, dans lequel un signal de réception est généré à partir d'une lumière de réception (14) et est évalué pour obtenir une information sur l'objet, et en supplément, une distance d'objet par rapport à un objet respectif (28) est déterminée,
**caractérisé en ce que**
une grandeur de mesure pour un objet (28) est obtenue à partir du signal de réception, la grandeur de mesure est affectée à la distance d'objet mesurée pour l'objet (28), et après détection d'une pluralité d'objets (28), une première distribution (38) de la grandeur de mesure sur la distance d'objet est formée.
